(19) **Europäisches Patentamt / European Patent Office / Office européen des brevets**

(11) **EP 2 824 634 B1**

(12) # EUROPEAN PATENT SPECIFICATION

(45) Date of publication and mention
of the grant of the patent:
**07.06.2017 Bulletin 2017/23**

(51) Int Cl.:
*G06T 3/60* ^(2006.01)

(21) Application number: **13305972.5**

(22) Date of filing: **09.07.2013**

(54) **Method and device for rotating a multidimensional space**

Verfahren und Vorrichtung zum Drehen eines mehrdimensionalen Raums

Procédé et dispositif pour faire tourner un espace multidimensionnel

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**14.01.2015 Bulletin 2015/03**

(73) Proprietor: **ALCATEL LUCENT
92100 Boulogne-Billancourt (FR)**

(72) Inventors:
• **Aerts, Maarten**
  **9120 Beveren-Waas (BE)**
• **Lievens, Sammy**
  **2930 Brasschaat (BE)**
• **Namboodiri, Vinay**
  **Mumbai 400062 (IN)**
• **Tytgat, Donny**
  **9860 Oosterzele (BE)**

(74) Representative: **ALU Antw Patent Attorneys
Intellectual Property and Standards
Copernicuslaan 50
2018 Antwerp (BE)**

(56) References cited:
**US-A- 5 767 854    US-A1- 2007 236 457**

• **BAJAJ C L ET AL: "Hypervolume visualization: a challenge in simplicity", VOLUME VISUALIZATION, 1998. IEEE SYMPOSIUM ON, IEEE, NY, USA, 19 October 1998 (1998-10-19), pages 95-102,172, XP010313233,**
• **HENRIKSEN K ET AL: "Virtual trackballs revisited", IEEE TRANSACTIONS ON VISUALIZATION AND COMPUTER GRAPHICS, vol. 10, no. 2, 1 March 2004 (2004-03-01), pages 206-216, XP002298742,**
• **MARY ANNE FISHERKELLER ET AL: "PRIM-9: An interactive multidimensionaldata display and analysis system", INTERNET CITATION, 1 April 1974 (1974-04-01), XP009174064, Retrieved from the Internet: URL:http://slac.stanford.edu/pubs/slacpubs /1250/slac-pub-1408.pdf [retrieved on 2013-11-08]**
• **SHOEMAKE K: "ARCBALL: A User Interface for Specifying Three-Dimensional Orientation Using a Mouse", PROCEEDINGS. GRAPHICS INTERFACE '92, 1 January 1992 (1992-01-01), pages 151-156, XP002227630,**
• **DUFFIN K L ET AL: "Spiders: A New User Interface for Rotation and Visualization of N-Dimensional Point Sets", PROCEEDINGS OF THE IEEE CONFERENCE ON VISUALIZATION, WASHINGTON, OCT. 17 - 21, 1994, IEEE COMP. SOC. PRESS, US, 17 October 1994 (1994-10-17), pages 205-211, XP000515792,**
• **BRITTON E.G. ET AL.: "Making Nested Rotations Convenient for the User", SIGGRAPH '78, 3 August 1978 (1978-08-03), pages 222-227, XP002716003,**
• **CHEN M ET AL: "A Study in Interactive 3-D Rotation Using 2-D Control Devices", COMPUTER GRAPHICS, ACM, US, vol. 22, no. 4, 1 August 1988 (1988-08-01) , pages 121-129, XP002227629,**

**(Cont. next page)**

- POUPYREV I ET AL: "Non-Isomorphic 3D Rotational Techniques", CHI 2000, CONFERENCE ON HUMAN FACTORS IN COMPUTING SYSTEMS. THE HAGUE, NETHERLANDS, APRIL 1-5, 2000; ACM, US, 1 April 2000 (2000-04-01), pages 540-547, XP001090204,

- "Ch. 6 - Viewing in 3D," In: J. Foley et al.: "Computer Graphics - Principles and Practice 2nd edition", 1990, Addison - Wesley, pages 229-283,

**Description**

FIELD OF THE INVENTION

The present invention relates to the field of user interface. In particular, the present invention relates to a method and a device for rotating a multidimensional space.

BACKGROUND

Visualizing multidimensional data is hard, because a typical user interface renders in two, at most three dimensions at once. Any higher dimension is physically impossible to render, unless projecting it on a lower 2D or 3D visualization space. Even harder is navigating through the high dimensional space. Navigating is the process of defining a good projection from this high dimensional space to the 2D or 3D visualization space, using some input device. It requires a mapping of the limited degrees of freedom of the input device onto the degrees of freedom of that projection.

There are known solutions for navigating through 3D data, in particular for rotating 3D data. For example, a 3D trackball is an input device comprising a 3D sphere which can be rotated by the user. A rotation of the sphere can be mapped to a rotation of the 3D data. For a 2D input device such a mouse or a touchpad, a virtual trackball may be used. A virtual trackball is an imaginary sphere in the 3D space. A user may define a rotation of the data by rotating this sphere as if the mouse pointer, when clicked, is attached to a point on the sphere. Moving the mouse will cause the sphere, and thus the data, to rotate around its centre. Note that this sphere is not always imaginary: it may be drawn onto the screen as well.

However, there is no convenient solution for rotating higher dimensional spaces, such as 4D spaces or more. For example, in the axes-based interface of Bajaj, Chandrajit L., et al. "Hypervolume visualization: a challenge in simplicity." Volume Visualization, 1998. IEEE Symposium on. IEEE, 1998, an additional interface is needed when axes overlap. Also, Henriksen K et Al. "Virtual trackball revisited", IEEE TRANSACTIONS ON VISUALIZATION AND COMPUTER GRAPHICS, VOL. 10, NO. 2, MARCH/APRIL 2004 describes a 3D virtual trackball.

SUMMARY

It is thus an object of embodiments of the present invention to propose a method and a device for rotating a multidimensional space, which do not show the inherent shortcomings of the prior art.

Accordingly, embodiments relate to a method for rotating a multidimensional space as specified in claim 1.

Correlatively, embodiments relate to a device for rotating a multidimensional space, as specified in claim 8.

The method may comprise displaying, in the 2D visualization space, a projection of the D-dimensional space rotated according to the rotation matrix.

The region specified by the user may be the region wherein at least one of the first point and the second point is located.

Determining the region specified by the user may comprise determining a distance from the origin of the 2D visualization space in function of the 2D coordinates of at least one of the first point and the second point.

The method may comprise displaying the regions in the 2D visualization space.

Determining the rotation matrix may comprise:

- determining a singular value decomposition of a matrix composed of said first D-dimensional vector and said second D-dimensional vector,
- determining a static hyperplane in function of said singular value decomposition, and
- determining a rotation matrix for rotating the D-dimensional space along the static hyperplane.

The third dimension may be associated with the region wherein the second point is located.

The device may comprise a 2D input interface.

Embodiments also relate to a computer program including instructions adapted to perform said method for rotating a multidimensional space when said program is executed by a computer.

BRIEF DESCRIPTION OF THE DRAWINGS

The above and other objects and features of the invention will become more apparent and the invention itself will be best understood by referring to the following description of embodiments taken in conjunction with the accompanying drawings wherein:

Figure 1 shows a 2D visualization space of a user interface for displaying multidimensional data,
Figure 2 is a flowchart of a method for rotating a multidimensional space,
Figure 3 is a graph of functions which may be used in the method of figure 2, and
Figure 4 is a structural view of a device for rotating a multidimensional space.

DESCRIPTION OF EMBODIMENTS

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represents various processes which may be substantially represented in computer readable medium and so executed by a computer or processor, whether or not such computer or processor is explicitly shown.

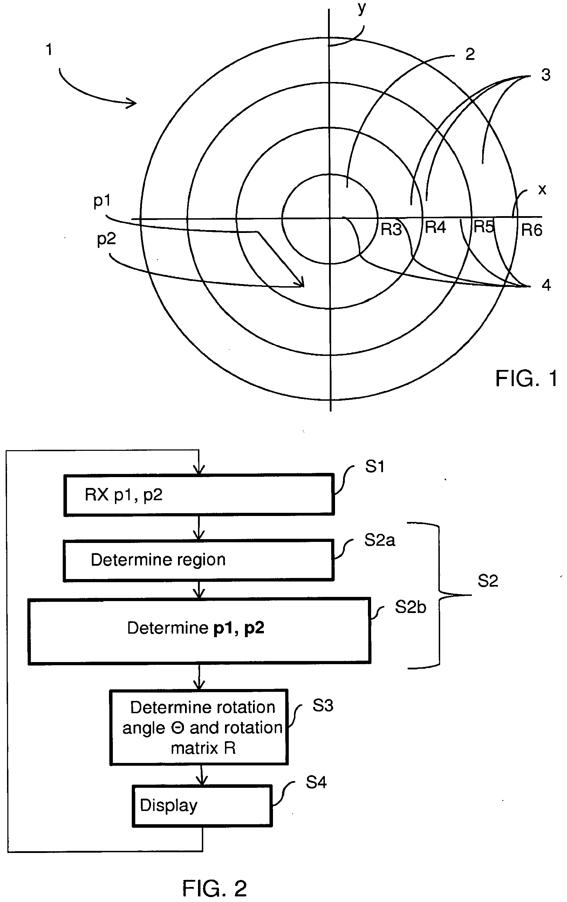

**Figure 1** shows a 2D visualization space 1 for displaying multidimensional data. The 2D visualization space 1 is displayed on a display interface 54 of a terminal 5 such as a screen. The terminal 5 comprises a 2D input device 53, for example a mouse, a touchpad or similar. The 2D visualization space 1 has a coordinate system comprising an axis x, an axis y and an origin O. A point $p_i$ of the 2D display space 1 can be specified by its 2D coordinates $(x_i, y_i)$.

D-dimensional data, wherein D is equal to or greater than 4, is projected for display on the 2D visualization space 1. The skilled person is aware of techniques for projecting multidimensional data onto a 2D visualization space and this will not be described in detail.

A D-dimensional virtual trackball allows rotating the D-dimensional space around its origin for changing its projections onto the 2D visualization space 1. The D-dimensional virtual trackball comprises an inner sphere of radius $R_3$, and D-3 outer shells of increasing radius $R_d$, with d ranging from 4 to D. The inner sphere and the outer shells are centered on the origin of the D-dimensional space.

In the 2D visualization space 1, the D-dimensional virtual trackball corresponds to D-2 regions: an inner circle 2 of radius $R_3$, and D-3 rings 3 delimited by radius $R_{d-1}$, $R_d$ around the origin O (with d ranging from 4 to D). The increasing distances $R_3$ to $R_D$ define a set of successive distance intervals 4: from 0 to $R_3$, from $R_3$ to $R_4$... from $R_{D-1}$ to $R_D$. Each of the regions corresponds to one of the distance intervals. The distance from the origin O of point $p_i$ of the 2D visualization space 1 is comprised in the distance interval corresponding to the region (that is the inner circle 2 or one of the rings 3) wherein $p_i$ is located.

Note that the inner circle 2 and the rings 3 may be displayed in the 2D visualization space 1, as illustrated in Figure 1 for the example of D=6. Alternatively, the circle 2 and rings 3 needs not be displayed.

By using the 2D input device 53 for interacting with the D-dimensional virtual trackball, the user of the terminal 5 may rotate the D-dimensional space around its origin, as described hereafter with reference to figure 2. For this, the user specifies a first point $p_1$ a second point $p_2$ of the 2D visualization space 1. For example, the user moves a pointer by using a mouse while holding a mouse button, and $p_1$ and $p_2$ are two successive positions of the pointer.

Depending on the region wherein $p_1$ and $p_2$ are located, the D-dimensional space is rotated in another subset of dimensions: The inner circle 2 behaves similarly to a 3D virtual trackball and corresponds to a rotation in the first three dimensions XYZ of the D-dimensional space. The second ring 3 (corresponding to distance interval from $R_3$ to $R_4$) correspond to a rotation in the first, second and fourth dimension. The third ring 3 (corresponding to distance interval from $R_4$ to $R_5$) correspond to a rotation in the first, second and fifth dimension and so on.

By always defining rotations including the first two dimensions of the D-dimensional space, the interaction with the mouse pointer looks more intuitive than with any other combination. Moreover, a rotation in any other combination of dimensions may be decomposed in a sequence of rotations including the first two dimensions and another one. Also, this split feels intuitive. The resulting rotation always lays in a hyperplane. This means that all points rotate in parallel hyperplanes around the center with a constant angle to another point in the same hyperplane. In 3D this is the only type of rotation possible. In 4D, it is called a 'simple' rotation, a small subset of all possible rotations. But by only scoping this type of rotations, the user feels he has some control of the interaction, making it more predictive.

**Figure 2** is a flowchart of a method for rotating the D-dimensional space, executed by the terminal 5.

Initially, the user inputs the 2D coordinates $(x_1, y_1)$ of a first point $p_1$ and $(x_2, y_2)$ of a second point $p_2$ (step S1). For example, as explained previously, the user moves a pointer by using a mouse while holding a mouse button, and $p_1$ and $p_2$ are two successive positions of the pointer.

Then, the terminal 5 determines two vectors $\mathbf{p_1}$ and $\mathbf{p_2}$, in the D-dimensional space, by projecting the positions of the points $p_1$ and $p_2$ from the 2D visualization space 1 to the D-dimensional space (step S2). Note that this projection is the opposite of the projection mentioned above (from the D-dimensional space to the 2D visualization space 1) and could be referred to as a back projection or reversed projection.

For this, the terminal 5 determines a region specified by the user (step S2a). In this embodiment, this region is the region wherein the point $p_2$ is located. Thus, the terminal 5 determines the distance Dist between the origin O and point $p_2$: $Dist = \sqrt{x_2^2 + y_2^2}$. Since $p_1$ and $p_2$ are close to each other, in another example the region may be the region wherein the point $p_1$ or an intermediate point between $p_1$ and $p_2$, for example the middle point between $p_1$ and $p_2$, is located. In that case, the distance Dist is calculated accordingly. In another example, the region specified by the user is the region of the initial mouse down event, even for successive pairs of points $p_1$ and $p_2$ located outside this region. In that case, the vectors $\mathbf{p_1}$ and $\mathbf{p_2}$ are determined for successive pairs of points $p_1$ and $p_2$, but the region remains the same.

In the example of the regions (inner circle 2 and rings 3) of figure 1, the distance Dist is comprised in the distance interval 4 corresponding to the region wherein $p_2$ (or another point as explained before) is located.

Then, the terminal 5 determines the two vectors $\mathbf{p_1}$ and $\mathbf{p_2}$ by projecting the 2D coordinates of the points $p_1$ and $p_2$ on three dimensions of the D-dimensional space: Two predetermined dimensions and, among the remaining D-2 other dimensions, a third dimensions which depends on the distance Dist (step S2b). The two predetermined dimensions may be the two first dimensions X and Y. The third dimension is the dimension associated with the region wherein the point $p_2$ is located. This can be expressed as follows:

$$\boldsymbol{p_1} = \left(x_1, y_1, f_3(Dist), f_4(Dist), \dots, f_D(Dist)\right)^T$$

$$\boldsymbol{p_2} = \left(x_2, y_2, f_3(Dist), f_4(Dist), \dots, f_D(Dist)\right)^T$$

wherein:

$$f_d(Dist) = \begin{cases} 1 & if \ R_{d-1} < Dist < R_d \\ 0 & otherwise \end{cases}$$

wherein one of the "<" is replaced with "<=".

The function $f_d$ is equal to 1 when the point $p_2$ is located in the inner circle 2 or the ring 3 corresponding to the dimension d, and 0 otherwise. This choice poses hard boundaries at the circle with radius $R_d$ between the rings 3.

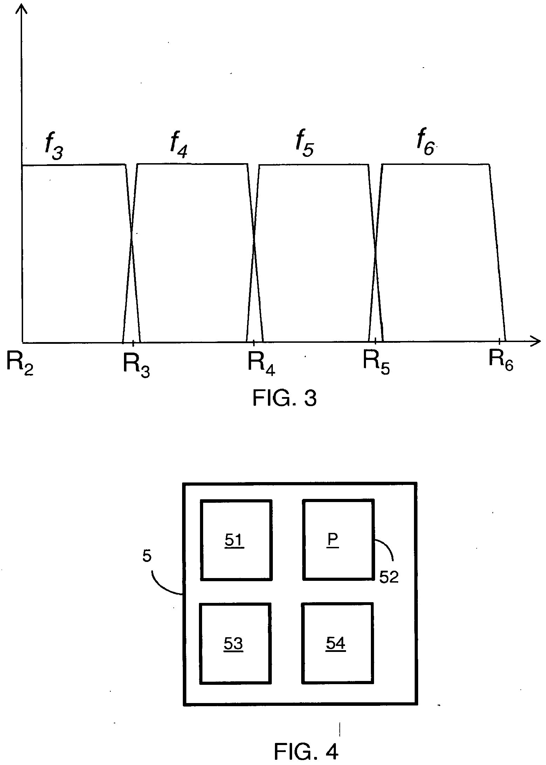

The functions $f_d$ are illustrated in the graph of **Figure 3**, for D = 6. It is apparent that Figure 3 is not an exact representation of the functions $f_d$ (they have rising and falling parts) to allow distinguishing between them. The 2D coordinates of the points $p_1$ and $p_2$ are projected on the X and Y dimensions and exclusively on a third dimension which depends on the region wherein $p_2$ is located.

In this embodiment wherein the regions associated with the D-2 dimensions are delimited by circles, is it possible to determine the region wherein the point $p_2$ is located in function of the distance Dist and the distances $R_d$.

Then, the terminal 5 determines a rotation matrix R in function of the vectors $\mathbf{p_1}$ and $\mathbf{p_2}$ (step S3). The person skilled in the art is capable of determining a rotation matrix R in function of two vectors in various manners.

In one example, since rotation is not about an axis, but about several at once, the terminal 5 determines a static hyperplane $(\mathbf{v_1}, \mathbf{v_2})$ along which the points are rotated. The complementary hyperspace $(\mathbf{v_{3 \dots}v_D})$ forms the set of rotation axes. These spaces are defined from the Singular Value Decomposition of the matrix $[\mathbf{p_1} \ \mathbf{p_2}]$:

$$[\mathbf{p1 \ p2}] = U \, \Sigma \, V^T$$

wherein V = $(\mathbf{v_1 \ v_2} \dots \mathbf{v_D})$.

Then, a rotation angle θ is determined:

$$\theta = \cos^{-1}\left(\frac{\boldsymbol{p_1} \cdot \boldsymbol{p_2}}{\|\boldsymbol{p_1}\| \cdot \|\boldsymbol{p_2}\|}\right)$$

The rotation matrix R may be calculated from the rotation angle θ and the matrix V as follows:

$$R = \cos\theta\, I_{D*D} + \sin\theta\,(\mathbf{v_1}\mathbf{v_2^T} - \mathbf{v_2}\mathbf{v_1^T}) + (1 - \cos\theta)\sum_{d=3}^{D}\mathbf{v_d}\mathbf{v_d^T}$$

wherein $I_{D*D}$ is the identity matrix of dimension D.

Then, the terminal 5 projects the D-dimensional space rotated according to the rotation matrix R and the rotation angle θ to the 2D visualization space 1, and displays the 2D visualization space 1 (step S4).

Steps S1 to S4 may be repeated for the next pair of successive points $p_1$ and $p_2$. Thus, the user may have the impression of holding the D-dimensional virtual trackball with the mouse pointer and rotating the D-dimensional space according to the rotation of the D-dimensional virtual trackball.

It can be noted that the method of Figure 2 does not take into account the data of the D-dimensional space. Thus, this is a generic method based on the user's input, which may apply independently of the data.

The method for rotating multidimensional data described here may be used in various examples.

In a first example, a user wants to browse through a media collection. All media objects are rated for each of the following genres: drama, comedy, thriller, action, horror, fantasy and science-fiction. As a result, the media all have a 7-dimensional feature descriptor with each dimension corresponding to its genre rating. The media objects are visualized as a 3D point cloud on a 2D screen. The closest points to the viewer are drawn with a title and a small screenshot. The size corresponds to how close the 3D point is to the user. Far away points are discarded or drawn as small dots. Note that these 3D points are somehow a projection of the original 7D space. A user can influence the projection directions by rotating the 7D point cloud using a 7D virtual trackball as described above. The ring-shaped regions of the trackball may be drawn in a subtle manner in the background of the screen. A user may bring e.g. comedy movies to the front or send thrillers to the back by dragging the trackball accordingly. Similarly the user may create a drama versus action plot by rotating the point cloud. Note that the projection directions do not have to align exactly with the genres. Combinations are possible too.

Other examples of multidimensional data include booking sites for hotels, restaurant guides, online shops... Websites offering such data reduce browsing to filtering and sorting. Often up to a 1 D list or a 2D map. This reduces the possibilities of the user, who feels constraint and needs to perform multiple searches with different filter and sort settings to get a complete overview (which may only exist in his head, as the constraint view doesn't allow the preferential overview). The D-dimensional virtual trackball described here allows the user to browse the data collection in all dimensions at once with a single interface.

High dimensional data is also available in many scientific branches. Meteorologists for instance want to visualize air pressure and wind speed, which is adding one or two dimensions on top of the four dimensions of space-time. Browsing through such data is constraint by the limits of the input controller, often a 2D mouse pointer. This means the scientist has to continuously switch between different tools or input modes in order to visualize the data in the way he wants. This is time consuming and the constraints may even disable the possibility of a preferential visualization, which makes the scientist miss important conclusions. Other scientific branches include astronomy, statistical analysis, quantum physics...

**Figure 4** is structural view of the terminal 5. The terminal 5 comprises a processor 51, a memory 52, the 2D input interface 53 and the display interface 54. The processor 51 allows executing computer programs stored in the memory 52. The steps of the methods of figure 2 may correspond to the execution of such a computer program P. In this embodiment, the terminal 5 is an example of device for rotating multidimensional data.

In another embodiment, which may be referred to as a client/server embodiment, the terminal 5 sends data representative of the positions of the points $p_1$ and $p_2$ to a server, which may perform some of the steps of figure 2. For example, the server receives the coordinates of the points $p_1$ and $p_2$, determines the vectors $\mathbf{p_1}$ and $\mathbf{p_2}$, the rotation matrix R and the rotation angle θ and sends back the rotation matrix R and the rotation angle θ to the terminal 5.

Embodiments of the method can be performed by means of dedicated hardware and/of software or any combination of both.

While the principles of the invention have been described above in connection with specific embodiments, it is to be clearly understood that this description is made only by way of example and not as a limitation on the scope of the invention, as defined in the appended claims.

**Claims**

1. Method for rotating a multidimensional space, executed by a device for rotating a multidimensional space, comprising:

   - obtaining (S1) 2D coordinates of a first point ($p_1$) and a second point ($p_2$) of a 2D visualization space (1) input by a user,
   - determining (S2) a first D-dimensional vector (**$p_1$**) and a second D-dimensional vector (**$p_2$**) by projecting said first point ($p_1$) and said second point ($p_2$) into a D-dimensional space, wherein D is equal to or greater than 4,
   - determining (S3) a rotation matrix (R) in function of said first D-dimensional vector (**$p_1$**) and said second D-dimensional vector (**$p_2$**),

   wherein said D-dimensional space has a first dimension, a second dimension and D-2 other dimensions, **characterized in that** the 2D visualization space (1) has D-2 predefined regions (2, 3), wherein the $n^{th}$ predefined region is associated with the first dimension, the second dimension and respectively the $n^{th}$ dimension among said D-2 other dimensions, wherein said regions comprise an inner circle (2) and D-3 annular rings (3) centered on an origin (O) of the 2D visualization space (1), defined by D-2 predetermined distances ($R_3$, $R_4$, $R_5$, $R_6$), and
   wherein determining (S2) said first D-dimensional vector (**$p_1$**) and said second D-dimensional vector (**$p_2$**) comprises:

   - determining (S2a) one of the regions specified by the user, and
   - projecting (S2b) the 2D coordinates of the first point ($p_1$) and the second point ($p_2$) on the dimensions associated with the region (2, 3) specified by the user.

2. Method according to claim 1, comprising displaying (S4), in the 2D visualization space (1), a projection of the D-dimensional space rotated according to the rotation matrix (R).

3. Method according to one of claims 1 and 2, wherein the region specified by the user is the region wherein at least one of the first point ($p_1$) and the second point ($p_2$) is located.

4. Method according to one of claims 1 to 3, wherein determining (S2a) one of the regions specified by the user comprises determining (S2a) a distance (Dist) from the origin (O) of said 2D visualization space (1) in function of the 2D coordinates of at least one of said first point ($p_1$) and said second point ($p_2$).

5. Method according to one of claims 1 to 4, comprising displaying said regions (2, 3) in the 2D visualization space (1).

6. Method according to one of claims 1 to 5, wherein said determining said rotation matrix (R) comprises:

   - determining a singular value decomposition of a matrix composed of said first D-dimensional vector (**$p_1$**) and said second D-dimensional vector (**$p_2$**),
   - determining a static hyperplane in function of said singular value decomposition, and
   - determining a rotation matrix (R) for rotating the D-dimensional space along the static hyperplane.

7. Method according to one of claims 1 to 6, wherein the region (2, 3) specified by the user is the region wherein the second point ($p_2$) is located.

8. Device for rotating a multidimensional space, comprising:

   - means (51, 52, 53, 54) for obtaining 2D coordinates of a first point ($p_1$) and a second point ($p_2$) of a 2D visualization space (1) input by a user,
   - means (51, 52, 53, 54) for determining a first D-dimensional vector (**$p_1$**) and a second D-dimensional vector (**$p_2$**) by projecting said first point ($p_1$) and said second point ($p_2$) into a D-dimensional space, wherein D is equal to or greater than 4,
   - means (51, 52, 53, 54) for determining a rotation matrix (R) in function of said first D-dimensional vector (**$p_1$**) and said second D-dimensional vector (**$p_2$**),

   wherein said D-dimensional space has a first dimension, a second dimension and D-2 other dimensions, **characterized in that** the 2D visualization space (1) has D-2 predefined regions (2, 3), wherein the $n^{th}$ predefined region is associated with the first dimension, the second dimension and respectively the $n^{th}$ dimension among said D-2 other dimensions, wherein said regions comprise an inner circle (2) and D-3 annular rings (3) centered on an origin (O) of the 2D visualization space (1), defined by D-2 predetermined distances ($R_3$, $R_4$, $R_5$, $R_6$), and wherein said means for determining said first D-dimensional vector (**$p_1$**) and said second D-dimensional vector (**$p_2$**) comprise:

- means for determining one of the regions specified by the user, and
- means for projecting the 2D of the first point ($p_1$) and the second point ($p_2$) coordinates on the dimensions associated with the region (2, 3) specified by the user.

**9.** Device according to claim 8, comprising a 2D input interface (53).

**10.** Computer program (P) including instructions adapted to perform the method according to one of claims 1 to 7 when said program is executed by a computer.

**Patentansprüche**

**1.** Verfahren zum Drehen eines mehrdimensionalen Raums, ausgeführt von einer Vorrichtung zum Drehen eines mehrdimensionalen Raums, umfassend:

- Erhalten (S1) von 2D-Koordinaten eines ersten Punkts ($p_1$) und eines zweiten Punkts ($p_2$) eines 2D-Visualisierungsraums (1), der von einem Benutzer eingegeben wird,
- Bestimmen (S2) eines ersten D-dimensionalen Vektors (**$p_1$**) und eines zweiten D-dimensionalen Vektors (**$p_2$**) durch Projizieren des besagten ersten Punkts ($p_1$) und besagten zweiten Punkts ($p_2$) in einen D-dimensionalen Raum, wobei D gleich oder größer ist als 4,
- Bestimmen (S3) einer Rotationsmatrix (R) in Abhängigkeit von dem besagten ersten D-dimensionalen Vektor (**$p_1$**) und besagten zweiten D-dimensionalen Vektor (**$p_2$**),

wobei der besagte D-dimensionale Raum eine erste Dimension, eine zweite Dimension und D-2 andere Dimensionen hat, **dadurch gekennzeichnet, dass** der 2D-Visualisierungsraum (1) D-2 vordefinierte Bereiche (2, 3) hat, wobei der n. vordefinierte Bereich der ersten Dimension, der zweiten Dimension und jeweils der n. Dimension unter den besagten D-2 anderen Dimensionen zugeordnet ist, wobei die besagten Bereiche einen inneren Kreis (2) und D-3 ringförmige Ringe (3) umfassen, die auf einen Ursprung (O) des 2D-Visualisierungsraums (1) zentriert sind, definiert durch D-2 vorausbestimmte Abstände ($R_3$, $R_4$, $R_5$, $R_6$), und wobei das Bestimmen (S2) des besagten ersten D-dimensionalen Vektors (**$p_1$**) und besagten zweiten D-dimensionalen Vektors (**$p_2$**) Folgendes umfasst:

- Bestimmen (S2a) eines der Bereiche, die von dem Benutzer angegeben werden, und
- Projizieren (S2b) der 2D-Koordinaten des ersten Punkts ($p_1$) und des zweiten Punkts ($p_2$) auf die Dimensionen, die dem Bereich (2, 3) zugeordnet sind, der von dem Benutzer angegeben wird.

**2.** Verfahren nach Anspruch 1, umfassend das Anzeigen (S4), in dem 2D-Visualisierungsraum (1), einer Projektion des D-dimensionalen Raums, der gemäß der Rotationsmatrix (R) gedreht wird.

**3.** Verfahren nach einem der Ansprüche 1 und 2, wobei der von dem Benutzer angegebene Bereich jener Bereich ist, in dem sich mindestens einer von dem ersten Punkt ($p_1$) und dem zweiten Punkt ($p_2$) befindet.

**4.** Verfahren nach einem der Ansprüche 1 bis 3, wobei das Bestimmen (S2a) eines der Bereiche, die von dem Benutzer angegeben werden, das Bestimmen (S2a) eines Abstands (Dist) ausgehend von dem Ursprung (O) des besagten 2D-Visualisierungsraums (1) in Abhängigkeit von den 2D-Koordinaten von mindestens einem von dem besagten ersten Punkt ($p_1$) und besagten zweiten Punkt ($p_2$) umfasst.

**5.** Verfahren nach einem der Ansprüche 1 bis 4, umfassend das Anzeigen der besagten Bereiche (2, 3) in dem 2D-Visualisierungsraum (1).

**6.** Verfahren nach einem der Ansprüche 1 bis 5, wobei das besagte Bestimmen der besagten Rotationsmatrix (R) Folgendes umfasst:

- Bestimmen einer Singulärwertzerlegung einer Matrix bestehend aus dem besagten ersten D-dimensionalen

Vektor ($\mathbf{p_1}$) und besagten zweiten D-dimensionalen Vektor ($\mathbf{p_2}$),
- Bestimmen einer statischen Hyperebene in Abhängigkeit von der besagten Singulärwertzerlegung, und
- Bestimmen einer Rotationsmatrix (R) zum Drehen des D-dimensionalen Raums entlang der statischen Hyperebene.

7. Verfahren nach einem der Ansprüche 1 bis 6, wobei der von dem Benutzer angegebene Bereich (2, 3) jener Bereich ist, in dem sich der zweite Punkt ($p_2$) befindet.

8. Vorrichtung zum Drehen eines mehrdimensionalen Raums, umfassend:

- Mittel (51, 52, 53, 54) zum Erhalten von 2D-Koordinaten eines ersten Punkts ($p_1$) und eines zweiten Punkts ($p_2$) eines 2D-Visualisierungsraums (1), der von einem Benutzer eingegeben wird,
- Mittel (51, 52, 53, 54) zum Bestimmen eines ersten D-dimensionalen Vektors ($\mathbf{p_1}$) und eines zweiten D-dimensionalen Vektors ($\mathbf{p_2}$) durch Projizieren des besagten ersten Punkts ($p_1$) und besagten zweiten Punkts ($p_2$) in einen D-dimensionalen Raum, wobei D gleich oder größer ist als 4,
- Mittel (51, 52, 53, 54) zum Bestimmen einer Rotationsmatrix (R) in Abhängigkeit von dem besagten ersten D-dimensionalen Vektor ($\mathbf{p_1}$) und besagten zweiten D-dimensionalen Vektor ($\mathbf{p_2}$),

wobei der besagte D-dimensionale Raum eine erste Dimension, eine zweite Dimension und D-2 andere Dimensionen hat, **dadurch gekennzeichnet, dass** der 2D-Visualisierungsraum (1) D-2 vordefinierte Bereiche (2, 3) hat, wobei der n. vordefinierte Bereich der ersten Dimension, der zweiten Dimension und jeweils der n. Dimension unter den besagten D-2 anderen Dimensionen zugeordnet ist, wobei die besagten Bereiche einen inneren Kreis (2) und D-3 ringförmige Ringe (3) umfassen, die auf einen Ursprung (O) des 2D-Visualisierungsraums (1) zentriert sind, definiert durch D-2 vorausbestimmte Abstände ($R_3$, $R_4$, $R_5$, $R_6$), und
wobei die besagten Mittel zum Bestimmen des besagten ersten D-dimensionalen Vektors ($\mathbf{p_1}$) und besagten zweiten D-dimensionalen Vektors ($\mathbf{p_2}$) Folgendes umfassen:

- Mittel zum Bestimmen eines der Bereiche, die von dem Benutzer angegeben werden, und
- Mittel zum Projizieren der 2D-Koordinaten des ersten Punkts ($p_1$) und des zweiten Punkts ($p_2$) auf die Dimensionen, die dem Bereich (2, 3) zugeordnet sind, der von dem Benutzer angegeben wird.

9. Vorrichtung nach Anspruch 8, umfassend eine 2D-Eingabeschnittstelle (53).

10. Computerprogramm (P), umfassend Anweisungen, die angepasst sind zum Durchführen des Verfahrens nach einem der Ansprüche 1 bis 7, wenn das besagte Programm von einem Computer ausgeführt wird.

**Revendications**

1. Procédé pour faire tourner un espace multidimensionnel, exécuté par un dispositif pour faire tourner un espace multidimensionnel, comprenant les étapes suivantes :

- obtenir (S1) des coordonnées 2D d'un premier point ($p_1$) et d'un second point ($p_2$) d'un espace de visualisation 2D (1) entrées par un utilisateur,
- déterminer (S2) un premier vecteur D-dimensionnel ($\mathbf{p_1}$) et un second vecteur D-dimensionnel ($\mathbf{p_2}$) en projetant ledit premier point ($p_1$) et ledit second point ($p_2$) dans un espace D-dimensionnel, où D est égal ou supérieur à 4,
- déterminer (S3) une matrice de rotation (R) en fonction dudit premier vecteur D-dimensionnel ($\mathbf{p_1}$) et dudit second vecteur D-dimensionnel ($\mathbf{p_2}$),

dans lequel ledit espace D-dimensionnel a une première dimension, une deuxième dimension et D-2 autres dimensions, **caractérisé en ce que** l'espace de visualisation 2D (1) a D-2 régions prédéfinies (2, 3), la $n^{ième}$ région prédéfinie étant associée à la première dimension, la deuxième dimension et respectivement la $n^{ième}$ dimension parmi lesdites D-2 autres dimensions, lesdites régions comprenant un cercle intérieur (2) et D-3 anneaux circulaires (3) centrés sur une origine (O) de l'espace de visualisation 2D (1), définie par D-2 distances prédéterminées ($R_3$, $R_4$, $R_5$, $R_6$), et
selon lequel la détermination (S2) dudit premier vecteur D-dimensionnel ($\mathbf{p_1}$) et dudit second vecteur D-dimensionnel ($\mathbf{p_2}$) comprend les étapes suivantes :

- déterminer (S2a) une des régions spécifiées par l'utilisateur, et
- projeter (S2b) les coordonnées 2D du premier point ($p_1$) et du second point ($p_2$) sur les dimensions associées à la région (2, 3) spécifiée par l'utilisateur.

2. Procédé selon la revendication 1, comprenant l'affichage (S4), dans l'espace de visualisation 2D (1), d'une projection de l'espace D-dimensionnel tourné selon la matrice de rotation (R).

3. Procédé selon l'une des revendications 1 et 2, selon lequel la région spécifiée par l'utilisateur est la région dans laquelle au moins l'un du premier point ($p_1$) et du second point ($p_2$) est situé.

4. Procédé selon l'une des revendications 1 à 3, selon lequel la détermination (S2a) d'une des régions spécifiées par l'utilisateur comprend la détermination (S2a) d'une distance (Dist) par rapport à l'origine (O) dudit espace de visualisation 2D (1) en fonction des coordonnées 2D d'au moins l'un dudit premier point ($p_1$) et dudit second point ($p_2$).

5. Procédé selon l'une des revendications 1 à 4, comprenant l'affichage desdites régions (2, 3) dans l'espace de visualisation 2D (1).

6. Procédé selon l'une des revendications 1 à 5, selon lequel ladite détermination de ladite matrice de rotation (R) comprend les étapes suivantes :

   - déterminer une décomposition en valeurs singulières d'une matrice composée dudit premier vecteur D-dimensionnel ($p_1$) et dudit second vecteur D-dimensionnel ($p_2$),
   - déterminer un hyperplan statique en fonction de ladite décomposition en valeurs singulières, et
   - déterminer une matrice de rotation (R) pour faire tourner l'espace D-dimensionnel le long de l'hyperplan statique.

7. Procédé selon l'une des revendications 1 à 6, selon lequel la région (2, 3) spécifiée par l'utilisateur est la région dans laquelle le second point ($p_2$) est situé.

8. Dispositif pour faire tourner un espace multidimensionnel, comprenant :

   - des moyens (51, 52, 53, 54) pour obtenir des coordonnées 2D d'un premier point ($p_1$) et d'un second point ($p_2$) d'un espace de visualisation 2D (1) entrées par un utilisateur,
   - des moyens (51, 52, 53, 54) pour déterminer un premier vecteur D-dimensionnel ($p_1$) et un second vecteur D-dimensionnel ($p_2$) en projetant ledit premier point ($p_1$) et ledit second point ($p_2$) dans un espace D-dimensionnel, où D est égal ou supérieur à 4,
   - des moyens (51, 52, 53, 54) pour déterminer une matrice de rotation (R) en fonction dudit premier vecteur D-dimensionnel ($p_1$) et dudit second vecteur D-dimensionnel ($p_2$), dans lequel ledit espace D-dimensionnel a une première dimension, une deuxième dimension et D-2 autres dimensions, **caractérisé en ce que** l'espace de visualisation 2D (1) a D-2 régions prédéfinies (2, 3), la $n^{ième}$ région prédéfinie étant associée à la première dimension, la deuxième dimension et respectivement la $n^{ième}$ dimension parmi lesdites D-2 autres dimensions, lesdites régions comprenant un cercle intérieur (2) et D-3 anneaux circulaires (3) centrés sur une origine (O) de l'espace de visualisation 2D (1), définie par D-2 distances prédéterminées ($R_3$, $R_4$, $R_5$, $R_6$), et

   selon lequel lesdits moyens pour déterminer ledit premier vecteur D-dimensionnel ($p_1$) et ledit second vecteur D-dimensionnel ($p_2$) comprennent :

   - des moyens pour déterminer une des régions spécifiées par l'utilisateur, et
   - des moyens pour projeter les coordonnées 2D du premier point ($p_1$) et du second point ($p_2$) sur les dimensions associées à la région (2, 3) spécifiée par l'utilisateur.

9. Dispositif selon la revendication 8, comprenant une interface d'entrée 2D (53).

10. Programme informatique (P) incluant des instructions adaptées pour effectuer le procédé selon l'une des revendications 1 à 7 lorsque ledit programme est exécuté par un ordinateur.

FIG. 1

FIG. 2

FIG. 3

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Hypervolume visualization: a challenge in simplicity. **BAJAJ ; CHANDRAJIT L. et al.** Volume Visualization, 1998. IEEE Symposium on. IEEE, 1998

- **HENRIKSEN et al.** Virtual trackball revisited. *IEEE TRANSACTIONS ON VISUALIZATION AND COMPUTER GRAPHICS,* March 2004, vol. 10 (2